# EUROPEAN PATENT SPECIFICATION

(11) **EP 1 048 895 B1**
(45) Date of publication and mention of the grant of the patent: **14.03.2001**
(21) Application number: 99108131.6
(22) Date of filing: 24.04.1999
(51) Int. Cl.: F21V 7/00, B60Q 1/04

(54) **Pedestrian protection headlamp**
Scheinwerfer mit Fussgängerschutzeinrichtung
Projecteur avec dispositif de protection des piétons

(43) Date of publication of application: 02.11.2000
(73) Proprietor: Ford Global Technologies, Inc., A subsidiary of Ford Motor Company, Dearborn, Michigan 48126 (US)
(72) Inventor: Howard, Mark Shane, 52070 Aachen (DE)
(74) Representative: Drömer, Hans-Carsten, Dipl.-Ing.

(56) References cited:
- EP-A- 0 620 137
- DE-C- 3 728 752
- US-A- 4 475 148
- US-A- 4 644 447

## Description

The invention concerns the design of a headlamp with optimized properties with respect to pedestrian protection.

The headlamp consists typically of a headlamp cover with a front surface forming the lens. This cover at its periphery forms a shoulder which is rearwardly connected to the headlamp body.

According to DE 37 28 752 C 1, the headlamp body in the range of the joint between body and cover is deformable so that in case of a collision the cover may, after deformation of the respective parts of the headlamp body, be moved backwards into the space behind the cover. The joint line between cover and body is surrounded by a frame. In case of a collision, the frame and the front end portions of the headlamp body which are exposed after the cover has been moved backwards, may give rise to a risk of injuries.

The object of this invention is to reduce the risk of injuries in case of a collision with a pedestrian.

The headlamp according to the invention includes a headlamp cover with a front surface forming the lens, which cover at its periphery forms a shoulder. The headlamp further includes a headlamp body arranged rearwardly to the cover's shoulder. The headlamp is characterized in that, from the shoulder of the cover integrated sidewalls extend rearwardly towards the joint where at the end portions of the sidewalls the headlamps body is attached. These integrated sidewalls have mechanically weakened deformable portions arranged between the shoulder and the joint.

By this design, several advantages with respect to a reduced risk of injuries are achieved. The joint between the cover and the headlamp body is moved further away from the front surface of the cover, therefore, the risk that a relatively sharp edge of the cover may injure the pedestrian is reduced.

Additionally, the weakened portions of the integrated sidewalls allow an optimization with respect to the deformation so that the front surface of the cover can move backwards, but serves as a shield between the pedestrian and the rearward parts of the cover.

An additional advantage is that the impact energy is absorbed through the deformation of the headlamp body rather than movement of the whole headlamp body.

The integrated sidewalls would normally be of the same material as the cover, but with respect to the optimization of the deformation a plastically deformable material may be used as an intermediate between the front surface and the body.

The optimization of the deformation can be achieved by various means. For example, the wall-thickness may be reduced by slots or a groove following an intermediate contour between the shoulder and the joint. The deformation of the sidewalls thus can be controlled by the optimal location of thinner areas of the sidewalls thickness. In case of a collision with a pedestrian, the cover flattens and there is an increased level of stress in the cover. Stress concentrations occur in the region of the slots (grooves) and this leads to the formation of plastic hinges. The slots are positioned in an optimal manner so that the material is primarily subjected to two dimensional stress field, hence the sidewalls behave in a ductile manner and therefore deform predictably. As the sidewalls begin to fold the deformable portions of the sidewalls are moved inwardly and the front surface of the cover shields the edges.

Preferably, the cover in the area of the shoulder has an increased wall thickness which serves to improve a shielding function of the covers front surface. This increased wall thickness further way extend along the sidewalls up to the deformable portions which enhances the shielding function of the cover.

In a preferred embodiment, the cover in the area of the shoulder has a triangular (V-shaped) cross sectional form. Thereby, the shoulder is further stiffened which prevents the sidewalls and/or edges of the body from breaking through the front surface of the cover. Above that the shoulder by this design is mechanically stiffened which supports the inwardly directed deformation of the sidewalls.

Further details concerning the invention are described with respect to the schematic drawings.

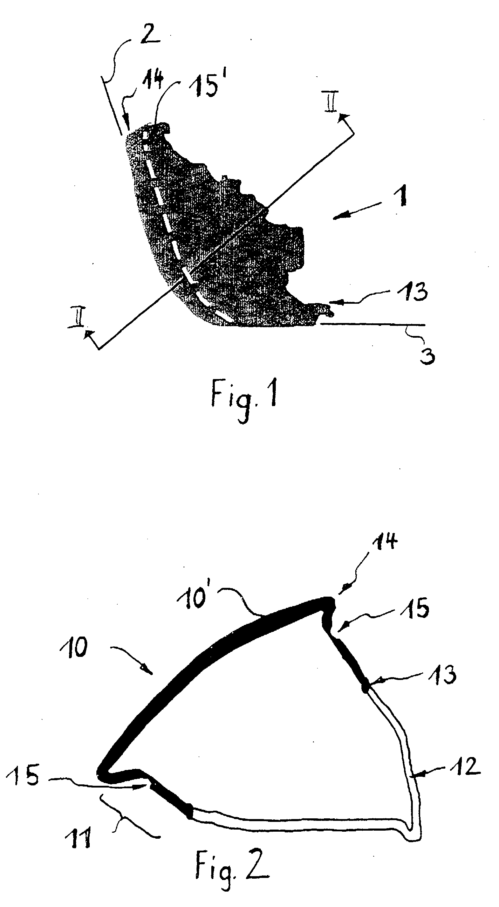

Fig.1 shows the headlamp arranged in the front left corner of the vehicle in plan view. The headlamp 1 is arranged between the front 2 of the vehicle (e.g. front grille) and the side 3 of the vehicle (fender).

Fig. 2 shows a cross section II-II as indicated in Fig. 1. The headlamp consists of a cover 10 and a body 12 which are connected to each other by joint 13. The cover 10 has sidewalls 11 which extend rearwardly from the shoulder 14 towards the joint 13. The sidewalls 11 preferably have a wall-thickness which is smaller than the wall-thickness of the front surface 10' of the cover 10. For controlled deformation grooves or slots 15, 15' are arranged in the sidewalls following a contour which is intermediate between the joint 13 and the shoulder 14 Fig. 4).

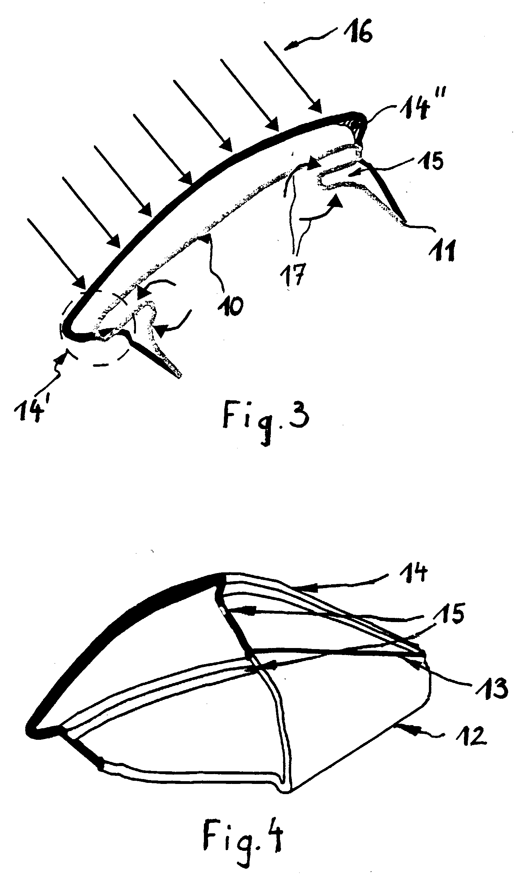

As shown in Fig. 3 in case of an impact, the load 16 is distributed along the front surface of the cover. The deformable portions in the sidewalls form plastically deformable hinges which allow controlled deformation as indicated by arrows 17. The V-shaped cross section 14', 14" mechanically stiffenes the shoulder so that the cover 10 shields the pedestrian against the headlamps body.

## Claims

1. Pedestrian protection headlamp including a headlamp cover (10) with a front surface (10') forming the lens, which cover (10) at its periphery forms a shoulder (14, 14', 14") and further including a headlamp body (12) arranged rearwardly to the cover's shoulder, characterized in that, from the shoulder (14, 14', 14") of the cover (10) integrated sidewalls (11) extend rearwardly towards the joint (13) where at the end portions of the sidewalls (11) the cover is attached to the body (12) and wherein the integrated sidewalls (11) have mechanically weakened, deformable portions (15, 15') arranged between the shoulder (14, 14', 14") and the joint (13).

2. Pedestrian protection headlamp according to claim 1, characterized in that, the cover (10) in the area of the shoulder (14) has an increased wall-thickness.

3. Pedestrian protection headlamp according to claims 1 or 2, charaterized in that the cover (10) in the area of the shoulder has a triangular (14', 14") cross sectional form.

## Patentansprüche

1. Ein den Fussgänger schützender, vorderer Scheinwerfer, bestehend aus dem Scheinwerferdeckel (10) mit einer Vorderfläche (10'), die die Linse bildet; deren Deckel (10) an seinem Rand einen Vorsprung (14, 14', 14") bildet und ausserdem einen Scheinwerferkörper (12) enthält, der rückwärts zum Vorsprung des Deckels angebracht ist, dadurch gekennzeichnet, dass sich eingebaute Seitenwände (11) vom Vorsprung (14, 14', 14") des Deckels (10) nach hinten zur Dichtung (13) erstrecken, wo an den Endabschnitten der Seitenwände (11) der Deckel am Körper (12) befestigt ist und wo die eingebauten Seitenwände (11) mechanisch abgeschwächte, verformbare Abschnitte (15, 15') haben, die zwischen dem Vorsprung (14, 14', 14") und der Dichtung (13) angebracht sind.

2. Ein den Fussgänger schützender, vorderer Scheinwerfer nach Anspruch 1, dadurch gekennzeichnet, dass der Deckel (10) im Bereich des Vorsprungs (14) eine verstärkte Wanddicke hat.

3. Ein den Fussgänger schützender, vorderer Scheinwerfer nach Anspruch 1 oder 2, dadurch gekennzeichnet, dass der Deckel (10) im Bereich des Vorsprungs eine dreieckige (14', 14") Querschnittsform hat.

## Revendications

1. Phare à protection pour les piétons comprenant une calotte de phare (10) comportant une surface avant (10') formant la lentille, laquelle calotte (10) forme au niveau de sa périphérie un épaulement (14, 14', 14'') et comprenant en outre un corps de phare (12) agencé par l'arrière sur l'épaulement de la calotte, caractérisé en ce que, à partir de l'épaulement (14, 14', 14'') de la calotte (10) des parois latérales intégrées (11) s'étendent vers l'arrière en direction du joint (13) où au niveau des parties d'extrémité des parois latérales (11) la calotte est fixée au corps (12) et dans lequel les parois latérales intégrées (11) comportent des parties déformables, mécaniquement affaiblies (15, 15') disposées entre l'épaulement (14, 14', 14'') et le joint (13).

2. Phare à protection pour les piétons selon la revendication 1, caractérisé en ce que la calotte (10) dans la zone de l'épaulement (14) présente une épaisseur de paroi accrue.

3. Phare à protection pour les piétons selon les revendications 1 ou 2, caractérisé en ce que la calotte (10) dans la zone de l'épaulement présente une forme en section transversale triangulaire (14', 14'').
